(19) Europäisches Patentamt
European Patent Office
Office européen des brevets

(11) **EP 2 042 890 A2**

(12) **EUROPÄISCHE PATENTANMELDUNG**

(43) Veröffentlichungstag:
**01.04.2009 Patentblatt 2009/14**

(51) Int Cl.:
***G01S 17/48*** *(2006.01)*

(21) Anmeldenummer: **08104887.8**

(22) Anmeldetag: **28.07.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(30) Priorität: **26.09.2007 DE 102007046093**

(71) Anmelder: **ROBERT BOSCH GMBH**
**70442 Stuttgart (DE)**

(72) Erfinder: **Schneider, Marcus**
**71642, Ludwigsburg (DE)**

(54) **Distanzmessvorrichtung**

(57)    Eine Distanzmessvorrichtung zum Messen einer Distanz D zu einem Objekt, umfassend eine Lichtquelle zum Aussenden eines Lichtsignals, eine zumindest einen Empfangssensor aufweisende Empfangseinrichtung zum Empfangen des ausgesendeten und an einem Objekt reflektierten Lichtsignals und eine Auswerteeinrichtung zum Auswerten des empfangenen Lichtsignals, wobei die Empfangseinrichtung und die Auswerteeinrichtung derart ausgebildet und eingerichtet sind, dass verschiedene zu messende Distanzen $D_1$ bis $D_n$ bei konstantem absoluten Distanzmessfehler $\Delta D$ ermittelbar sind.

**Fig. 1**

**Beschreibung**

Die vorliegende Erfindung bezieht sich auf eine Distanzmessvorrichtung zum Messen einer Distanz zu einem Objekt sowie auf ein entsprechendes Distanzmessverfahren.

**Stand der Technik**

Im Stand der Technik sind mehrere verschiedene Distanzmessvorrichtungen bekannt, die dazu dienen, eine Distanz zu einem Objekt zu ermitteln, wobei der Begriff "Objekt" vorliegend nicht nur Gegenstände sondern auch Personen einschließen soll.

Beispielsweise sind elektronische Distanzmessgeräte (so genannte EDM-Geräte) bekannt, bei denen die Ermittlung von Entfernungen auf der Laufzeit- oder Phasenmessung elektromagnetischer Wellen basiert. Dabei wird eine elektromagnetische Welle von einer Sendeeinrichtung des Messgeräts ausgesendet, an dem entfernt gelegenen Messobjekt reflektiert, die reflektierte Welle von dem Messgerät mit Hilfe einer Empfangseinrichtung empfangen und mit der ausgesendeten Welle mittels einer in dem Gerät vorgesehenen Auswerteeinrichtung verglichen.

Optische Verfahren sind derzeit den auf Ultraschall basierenden Verfahren überlegen, da der mit Hilfe einer Sendeeinrichtung ausgesendete Schall gerade bei größeren Distanzen (beispielsweise oberhalb von 10 m) eine deutliche Aufweitung bzw. räumliche Streuung erfährt, weshalb der eigentliche Reflexionspunkt bei komplexen Reflektoren bzw. Objekten, wie beispielsweise Ecken oder dergleichen, unbekannt ist. Dies ist bei Geräten, deren Sendeeinrichtungen ein gebündeltes optisches Signal aussenden, wie zum Beispiel einen Laserstrahl, nicht der Fall.

Ein Nachteil bei den optischen Verfahren besteht allerdings darin, dass normalerweise in einem Modulations-Frequenzbereich zwischen 1 MHz (Phasenauswertung) und größer 100 MHZ (Pulsecho) gearbeitet wird und eine hohe Frequenzstabilität erforderlich ist. Es sind entsprechend teure, hochfrequent modulierbare Lichtquellen und Empfangseinrichtungen erforderlich. Ferner können keine preiswerten Resonatoren eingesetzt werden. Des Weiteren müssen bei phasenbasierten Geräten häufig Justagen durchgeführt werden, was recht mühsam und zeitaufwendig ist, bzw. die Geräte müssen sich selbst justieren, wie beispielsweise mit Hilfe integrierter mechanischer Vorrichtungen.

Eine relativ kostengünstige Variante sind so genannte triangulations-basierte Distanzmessvorrichtungen. Bei diesen wird mittels einer in der Nähe der Lichtquelle angebrachten Empfangseinrichtung der Winkel des empfangenen reflektierten Lichtsignals zum von der Lichtquelle ausgesendeten Lichtsignal erfasst. Der Vorteil eines solchen Verfahrens besteht darin, dass der Winkel sehr einfach mittels optischer Abbildung auf einen Sensor bestimmt werden kann.

Ein großes Problem bei solchen triangulations-basierten Distanzmessvorrichtungen besteht allerdings darin, dass der Distanzmessfehler $\Delta D$ mit zunehmendem Abstand D zwischen Distanzmessvorrichtung und Objekt stark ansteigt, was nachfolgend unter Bezugnahme auf die Fig. 1 bis 3 der beiliegenden Zeichnung erläutert wird. Fig. 1 zeigt eine schematische Ansicht, die das Prinzip einer triangulations-basierten Distanzmessvorrichtung zeigt; Fig. 2 ist eine schematische Ansicht, anhand welcher die Entstehung von Messfehlern $\Delta D$ erläutert wird; und Fig. 3 ist eine qualitative, auf ‚1' normierte Darstellung des absoluten Distanzmessfehlers $\Delta D$ in Abhängigkeit von der realen Distanz D zu dem Objekt.

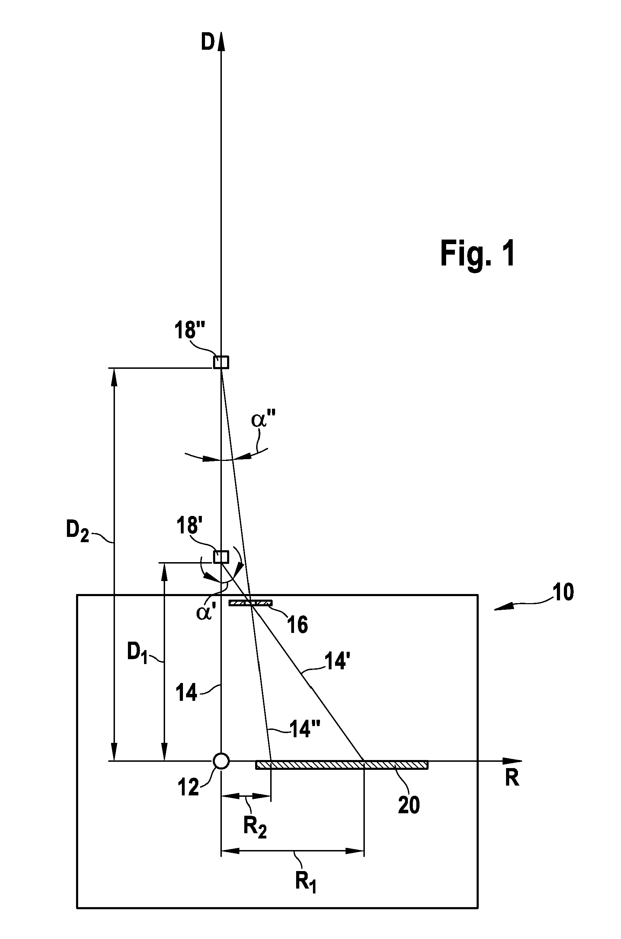

Fig. 1 zeigt schematisch eine durch einen Kasten angedeutete bekannte triangulations-basierte Distanzmessvorrichtung, die allgemein mit der Bezugsziffer 10 bezeichnet ist. Die Distanzmessvorrichtung 10 umfasst eine Lichtquelle 12 in Form eines Lasers, die Lichtsignale bzw. Laserstrahlen 14 in Richtung der Y-Achse aussendet, eine Blende 16, durch die an Objekten 18' und 18" reflektierte Lichtsignale 14' und 14" zurück in die Distanzmessvorrichtung 10 geleitet werden, und eine als Photosensor ausgebildete Empfangseinrichtung 20, auf welche die reflektierten Lichtsignale 14' und 14", welche die Blende 16 passiert haben, auftreffen. Die X-Achse repräsentiert den kürzesten lateralen Abstand R zwischen der Aussendungsrichtung der Lichtsignale (Y-Achse) und dem Auftreffpunkt der auf der Empfangseinrichtung 20 auftreffenden reflektierten Lichtsignale. Die Y-Achse repräsentiert die mit Hilfe der Distanzmessvorrichtung 10 zu messenden Distanz D zwischen der Lichtquelle 12 und einem Objekt.

Trifft nun ein von der Lichtquelle 12 ausgesendetes Lichtsignal auf einem Objekt 18' auf, so wird dieses Lichtsignal von dem Objekt 18' gestreut reflektiert. Ein Anteil 14' des reflektierten Streulichts durchdringt die Blende 16 unter dem Winkel $\alpha$' und trifft auf die Empfangseinrichtung 20 in einem lateralen Abstand $R_1$ entfernt von der Lichtquelle 12 auf. Dabei werden der Abstand $R_1$ und der Auftreffwinkel $\alpha$' von der Empfangseinrichtung 20 erfasst. Diese Werte werden an eine vorliegend nicht dargestellt Auswerteeinrichtung der Distanzmesseinrichtung 10 weitergeleitet, die dann die Distanz $D_1$ zum Objekt 18' unter Verwendung der Gleichung $D_1 = R_1 \times \tan \alpha$ ermittelt. In gleicher Weise kann auch eine Distanz $D_2$ zu einem Objekt 18" unter Verwendung ermittelter Werte für $R_2$ und $\alpha$" berechnet werden.

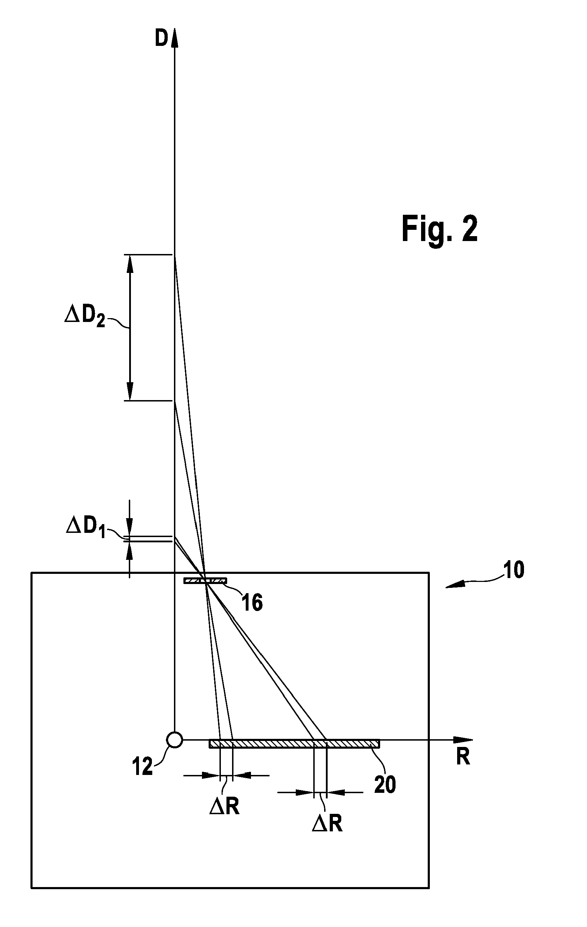

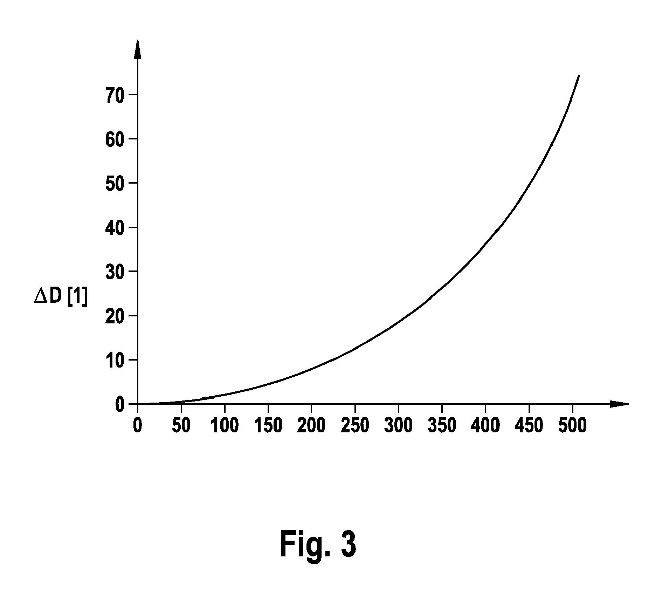

Ein Problem bei dem zuvor beschrieben Messprinzip besteht jedoch darin, dass die Winkeländerung auf der Seite der Empfangseinrichtung 20 mit zunehmender Distanz D immer kleiner wird. Als Folge verschiebt sich bei großen Objektdistanzen der Auftreffpunkt bzw. der kürzeste laterale Abstand R zwischen der Aussenderichtung (Y-Achse in Fig. 1 und 2) des Lichtsignals und dem Auftreffpunkt auf der Empfangseinrichtung 20 nur noch geringfügig, was den unangenehmen Umkehreffekt hat, dass bereits kleine laterale Messungenauigkeiten $\Delta R$ bezüglich des Auftreffpunktes R enorme absolute Distanzmessfehler ΔD in Bezug auf die zu bestimmende Distanz D erzeugen. Fig. 2 zeigt diesbezüglich, welche Auswirkung eine Messungenauigkeit ΔR auf den Distanzmessfehler ΔD bei den in Fig. 1 in den Abständen $D_1$ und $D_2$ angeordneten Objekten 18' und 18" hat. Wie es zu erkennen ist, ist der durch den gleichen Messfehler ΔR verursachte Distanzmessfehler $\Delta D_2$ bei dem in der Distanz $D_2$ angeordneten Objekt 18" wesentlich größer als der Distanzmessfehler $\Delta D_1$ bei dem in der Distanz $D_1$ angeordneten Objekt 18'. Fig. 3 ist eine qualitative, auf ‚1' normierte Darstellung des absoluten Distanzmessfehlers ΔD in Abhängigkeit von der Entfernung D zwischen dem Sensor 20 und einem Objekt, welcher der progressive Anstieg des Distanzmessfehlers ΔD mit zunehmender Distanz D zu entnehmen ist.

Aufgrund dieser progressiven Zunahme des Distanzmessfehlers ΔD sind Distanzmessvorrichtungen, die auf dem zuvor beschrieben Messprinzip beruhen, nur bedingt für genaue Messaufgaben geeignet, da bei vielen Messaufgaben, wie sie beispielsweise auf Baustellen der Automatisierung oder in der Fahrzeugtechnik anfallen, der absolute Fehler maßgeblich ist.

Ausgehend von diesem Stand der Technik ist es eine Aufgabe der vorliegenden Erfindung, eine alternative Distanzmessvorrichtung zum Messen einer Distanz D zu einem Objekt sowie ein alternatives Distanzmessverfahren zu schaffen.

**Offenbarung der Erfindung**

Zur Lösung dieser Aufgabe schafft die vorliegende Erfindung eine Distanzmessvorrichtung nach Anspruch 1 und ein Distanzmessverfahren nach Anspruch 16. Die Unteransprüche beziehen sich auf individuelle Ausführungsformen der vorliegenden Erfindung.

Die Distanzmessvorrichtung gemäß der vorliegenden Erfindung zum Messen einer Distanz D zu einem Objekt umfasst eine Lichtquelle zum Aussenden eines Lichtsignals, eine zumindest einen Empfangssensor aufweisende Empfangseinrichtung zum Empfangen des ausgesendeten und an einem Objekt reflektierten Lichtsignals und eine Auswerteeinrichtung zum Auswerten des empfangenen Lichtsignals. Die Lichtquelle umfasst je nach Anwendungsfall bzw. durchzuführender Messung bevorzugt einen Laser oder ein oder mehrere LED's, wobei eine Modulationseinrichtung zum Modulieren des von der Lichtquelle ausgesendeten Lichtsignals vorgesehen sein kann.

Erfindungsgemäß sind die Empfangseinrichtung und die Auswerteeinrichtung derart ausgebildet und eingerichtet, dass verschiedene Distanzen D1 bis Dn zu entsprechenden Objekten bei konstantem absoluten Distanzmessfehler ΔD ermittelbar sind. Hierzu weist die Empfangseinrichtung bevorzugt Winkelselektionsmittel auf, die derart ausgebildet sind, dass sie an dem Objekt reflektierte Lichtsignale nur dann auf den wenigstens einen Empfangssensor treffen lassen, wenn diese unter einem vorbestimmten und konstanten Winkel α in Bezug auf die Aussendungsrichtung des Lichtsignals auf die Winkelselektionsmittel treffen. Indem der Winkel α durch die Winkelselektionsmittel festgelegt wird, kann jeder Auftreffpunkt eines Lichtsignals auf dem wenigstens einen Empfangssensor der Empfangseinrichtung eindeutig einem bestimmten Winkelselektionsmittel und entsprechend einer bestimmten Distanz D zugeordnet werden, und zwar bei einem konstanten absoluten Distanzmessfehler ΔD, was in der nachfolgenden Beschreibung noch genauer erläutert wird.

Die Winkelselektionsmittel sind bevorzugt röhrenartige Elemente, die jeweils im Winkel α in Bezug auf die Aussenderichtung der Lichtsignale ausgerichtet sind. Beispielsweise kann es sich bei den Winkelselektionsmitteln um Durchgangsbohrungen handeln, die nebeneinander in gleichen Abständen im Winkel α in einem blockartigen Körper ausgebildet sind. Alternativ können die Winkelselektionsmittel auch in Form eines Plattenstapels mit kleinen, unter dem Winkel α ausgebildeten Schlitzen vorgesehen sein. Natürlich sind auch andere Ausgestaltungen der Winkelselektionsmittel denkbar, so lange sie Licht nur unter dem vorbestimmten Winkel α auf die Empfangseinrichtung treffen lassen.

Die Winkelselektionsmittel sind vorteilhaft in einer vorbestimmten regelmäßigen Formation angeordnet, wie beispielsweise linienförmig in Reihe, als Matrix oder dergleichen. Zur Fixierung des Winkels α kann die Empfangseinrichtung ferner eine für jedes Winkelselektionsmittel geeignet gestaltete Optik aufweisen.

Der zumindest eine Empfangssensor ist vorteilhaft ein Zeilensensor oder ein flächiger Sensor mit Matrixanordnung. Derartige Sensoren sind problemlos erhältlich und verhältnismäßig preiswert. Natürlich können auch mehrere Empfangssensoren vorgesehen und derart angeordnet werden, dass sie jeweils einem der Winkelselektionsmittel zugeordnet sind.

Die Empfangseinrichtung umfasst ferner bevorzugt eine Frequenzfiltereinrichtung, so dass lediglich das von der Lichtquelle ausgesendete modulierte Lichtsignal ausgewertet wird, nicht aber kontinuierliches oder anderweitig veränderliches Fremdlicht, wodurch Fremdlicht bedingte Messfehler eliminiert werden.

Die Auswerteeinrichtung ist vorteilhaft derart ausgebildet und eingerichtet, dass sie den Abstand D unter Verwendung der Gleichung D = tan α x R ermittelt, wobei α der vorbestimmte Winkel und R der kürzeste laterale Abstand zwischen der Aussendungsrichtung des Lichtsignals und der Position desjenigen Empfangssensors ist, der das Lichtsignal empfangen hat.

Ferner umfasst die Auswerteeinrichtung bevorzugt eine Intensitätsvergleichseinrichtung zum Vergleichen von Intensitäten verschiedener empfangener Lichtsignale. Gelangen Lichtsignale beispielsweise durch mehrere Winkelselektionsmittel auf den wenigstens einen Empfangssensor, so können die Intensitäten der einzelnen Lichtsignale mit Hilfe der Intensitätsvergleichseinrichtung miteinander verglichen und das Lichtsignal mit der stärksten Intensität ermittelt werden. Die Auswerteeinrichtung ist dabei vorteilhaft derart ausgebildet und eingerichtet, dass sie, wenn Lichtsignale an verschiedenen Positionen eines Empfangssensors oder an mehreren Empfangssensoren empfangen wurden, die Distanz D zu dem Objekt unter Verwendung des lateralen Abstands R zu demjenigen Empfangssensor ermittelt, der das Lichtsignal mit der größten Intensität empfangen hat.

Die vorliegende Erfindung bezieht sich zudem auf ein Verfahren zum Messen einer Distanz D zu einem Objekt mit Hilfe eines ausgesendeten Lichtsignals, wobei das Verfahren erfindungsgemäß derart ausgestaltet ist, dass verschiedene Distanzen $D_1$ bis $D_n$ zu Objekten bei konstantem Distanzmessfehler $\Delta D$ ermittelbar sind.

Das Verfahren umfasst bevorzugt die Schritte: Aussenden eines Lichtsignals; Empfangen des ausgesendeten und an einem Objekt reflektierten Lichtsignals, wobei das empfangene Lichtsignal einen vorbestimmten und konstanten Winkel $\alpha$ in Bezug auf die Aussenderichtung des Lichtsignals aufweist; Bestimmen der Empfangsposition, an der das Lichtsignal empfangen wurde; Ermitteln eines kürzesten lateralen Abstands R zwischen der Aussenderichtung des Lichtsignals und der Empfangsposition; und Ermitteln der Distanz D unter Verwendung der Gleichung D = tan $\alpha$ x R.

Das Lichtsignal wird dabei vorteilhaft intensitätsmoduliert ausgesendet, um es von Fremdlicht unterscheiden zu können. Hiezu werden die empfangenen Lichtsignale entsprechend gefiltert.

Die Empfangsposition des Lichtsignals wird zudem, wie es zuvor bereits beschrieben wurde, bevorzugt basierend auf einer Intensitätsverteilung empfangener Lichtsignale ermittelt, wodurch Messfehler vermieden werden können.

**Ausführungsbeispiel**

Es zeigt:

Fig. 1   eine schematische Ansicht einer bekannten triangulations-basierten Distanzmessvorrichtung;

Fig. 2   eine schematische Ansicht der in Fig. 1 dargestellten bekannten Distanzmesseinrichtung zur Erläuterung der Entstehung von Messfehlern;

Fig. 3   eine qualitative, auf ‚1' normierte Darstellung des absoluten Distanzmessfehlers in Abhängigkeit von der Distanz zu einem Objekt;

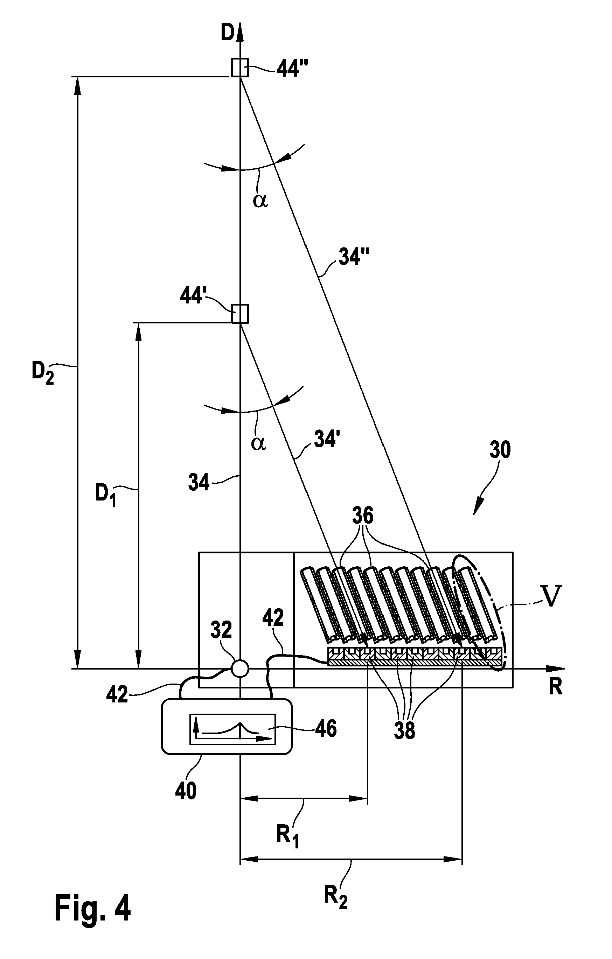

Fig. 4   eine schematische Ansicht einer Ausführungsform einer Distanzmessvorrichtung gemäß der vorliegenden Erfindung;

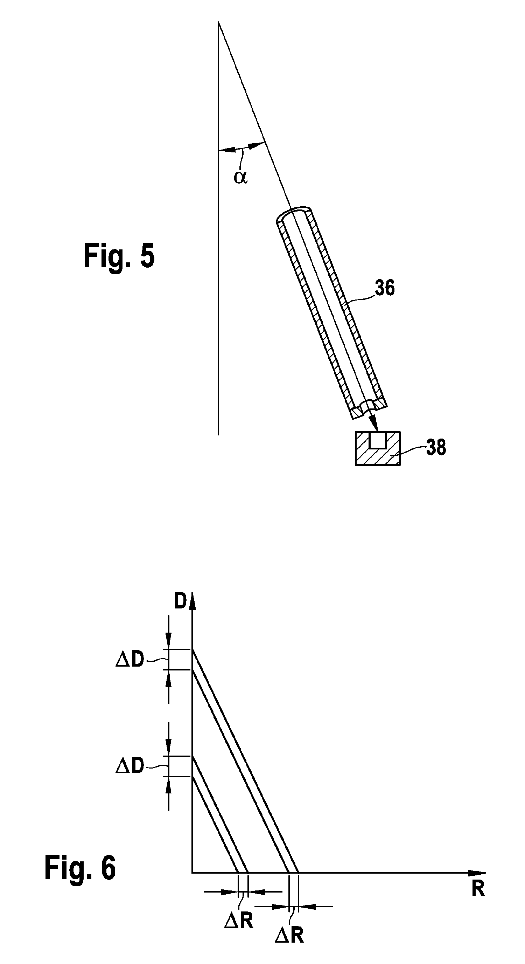

Fig. 5   eine vergrößerte Ansicht eines Winkelselektionsmittels der in Fig. 4 dargestellten erfindungsgemäßen Distanzmessvorrichtung und

Fig. 6   eine schematische Ansicht zur Erläuterung des bei der erfindungsgemäßen Distanzmessvorrichtung auftretenden absoluten Distanzmessfehlers.

Nachfolgend wird eine Ausführungsform einer erfindungsgemäßen Distanzmessvorrichtung unter Bezugnahme auf die Figuren 4 bis 6 genauer beschrieben, wobei sich gleiche Bezugsziffern auf gleiche Bauteile beziehen.

Fig. 4 ist eine schematische Ansicht einer Ausführungsform einer Distanzmessvorrichtung 30 gemäß der vorliegenden Erfindung. Die Distanzmessvorrichtung 30 umfasst eine Lichtquelle 32 in Form eines Lasers, die ein Lichtsignal 34 in einer Aussenderichtung (Y-Achse) emittiert. Alternativ können auch andere Lichtquellen als ein Laser verwendet werden, wie beispielsweise eine oder mehrere LED's. Ferner weist die Distanzmessvorrichtung 30 eine Mehrzahl von in Reihe nebeneinander angeordneten Winkelselektionsmitteln 36 in Form von Hohlzylindern auf, die in einem Winkel $\alpha$ zur Aussenderichtung des Lichtsignals geneigt neben der Lichtquelle 32 angeordnet sind. Unterhalb der Winkelselektionsmittel 36 sind mehrere Empfangssensoren 38, beispielsweise Licht-Strom-Wandler in Form von Photodioden, vorgesehen, wobei jeweils ein Empfangssensor 38 einem Winkelselektionsmittel 36 zugeordnet ist. Ein Winkelselektionsmittel 36 und ein zugehöriger Empfangssensor 38 sind in vergrößertem Maßstab in Fig. 5 dargestellt. Schließlich umfasst die Distanzmessvorrichtung 30 eine kombinierte Modulations- und Auswerteeinrichtung 40, die mit der Lichtquelle 32 und den Empfangssensoren 38 durch entsprechende Leiter 42 verbunden ist.

Wie es zuvor beschrieben wurde, emittiert die Lichtquelle 32 ein mit Hilfe der Modulations-und Auswerteeinrichtung 40 moduliertes Lichtsignal 34 in einer Aussenderichtung (Y-Achse). Dieses Lichtsignal trifft im Abstand $D_1$ auf ein Objekt 44' und wird gestreut reflektiert. Der in Richtung des Winkels $\alpha$ reflektierte Anteil des reflektierten Lichtsignals 34' trifft bei der Darstellung gemäß Fig. 4 auf das dritte Winkelselektionsmittel 36 von links, durchdringt dieses und gelangt zu dem zugeordneten Empfangssensor 38, bei dem es sich ebenfalls um den dritten von links handelt. Als Reaktion auf das Auftreffen des Lichtsignals erzeugt der Empfangssensor 38 ein entsprechendes Sensorsignal, das über den Leiter 42 an die Modulations- und Auswerteeinrichtung 40 geleitet wird. In ähnlicher Weise werden weitere Lichtsignale verarbeitet, die auf einen der Empfangssensoren 38 auftreffen. Jedoch muss es sich nicht bei allen Lichtsignalen um solche handeln, die von dem Objekt 44' reflektiert wurden. Auch kann Fremdlicht durch die Winkelselektionsmittel 36 auf die Empfangssensoren 38 gelangen. Nach Durchführung einer Frequenzfilterung innerhalb der Modulations-und Auswerteeinrichtung 40 entsprechend der vorangegangenen Modulation des ausgesendeten Lichtstrahl zum Filtern von Fremdlicht oder anderen Störgrößen setzt die Modulations- und Auswerteeinrichtung 40 die empfangenen Sensorsignale zu einem Signalverlauf 46 zusammen und ermittelt beispielsweise durch einfaches Vergleichen die höchste Intensität und die zugehörige Empfangseinrichtung 38. Anhand der zugehörigen Empfangseinrichtung kann dann der laterale Abstand $R_1$ ermittelt werden. Da nunmehr $\alpha$ und $R_1$ bekannt sind, kann die Distanz $D_1$ anhand der Gleichung $D_1 = \tan \alpha \times R_1$ in der Modulations- und Auswerteeinrichtung 40 berechnet werden.

Gleiches gilt für die Distanz $D_2$ zu einem Objekt 44". Hier gelangt der an dem Objekt 44" im Winkel $\alpha$ reflektierte Anteil des ausgesendeten Lichtsignals 34 durch den dritten Empfangssensor 36 von rechts auf den dritten Empfangssensor 38 von rechts, woraufhin nach entsprechender Frequenzfilterung und entsprechendem Intensitätsvergleich der laterale Abstand $R_2$ und somit die Distanz $D_2$ zum Objekt 44" ermittelt werden kann.

Vorliegend sollte klar sein, dass jedes Winkelselektionsmittel 36 und der jeweils zugehörige Empfangssensor 38 einer vorbestimmten Distanz $D_x$ zugeordnet ist. Die Anzahl der Winkelselektionsmittel bestimmt somit die Anzahl der messbaren Distanzen D. Je dichter die Winkelselektionsmittel nebeneinander angeordnet sind, desto besser wird dabei die Auflösung, was nachfolgend noch unter Bezugnahme auf Fig. 6 genauer erläutert wird.

Ferner sollte klar sein, dass anstelle einer Vielzahl von Empfangssensoren 38 auch Zeilensensoren eingesetzt werden können. Zudem können die Empfangssensoren 38 auch in einer anderen Konfiguration angeordnet sein, beispielsweise matrixförmig.

Die Modulationseinrichtung und die Auswerteeinrichtung können auch getrennt voneinander vorgesehen sein. Zudem kann gegebenenfalls auf die Filtereinrichtung und die Intensitätsvergleichseinrichtung verzichtet werden.

Schließlich können anstelle der hohlzylindrischen Winkelselektionsmittel auch andere Winkelselektionsmittel verwendet werden, wie beispielsweise Blenden und/oder kleine Linsen oder dergleichen.

Der wesentliche Vorteil, der mit der unter Bezugnahme auf die Fig. 4 und 5 beschriebenen Distanzmesseinrichtung 30 gemäß der vorliegenden Erfindung erzielt wird, wird nachfolgend unter Bezugnahme auf Fig. 6 erläutert. Fig. 6 zeigt schematisch die Beziehung zwischen einem Messfehler $\Delta R$ und dem absoluten Distanzmessfehler $\Delta D$. Der Messfehler $\Delta R$ ist konstant und von der Anordnung der Empfangseinrichtungen 38 abhängig. Je kleiner die Empfangseinrichtungen 38 (und somit natürlich auch die Winkelselektionsmittel 36) ausgebildet sind und je dichter die einzelnen Empfangseinrichtungen 38 beieinander angeordnet sind, desto kleiner ist $\Delta R$. Der absolute Distanzmessfehler $\Delta D$ ist ausschließlich von $\Delta R$ abhängig. Da $\Delta R$ konstant ist, gilt dies auch für $\Delta D$. Entsprechend ist die Distanzmesseinrichtung bzw. sind die Empfangseinrichtung und die Auswerteeinrichtung derart ausgebildet und eingerichtet, dass verschiedene Distanzen $D_1$ bis $D_n$ bei konstantem absolutem Distanzmessfehler $\Delta D$ ermittelbar sind.

Es sollte klar sein, dass die zuvor beschriebene Ausführungsform der vorliegenden Erfindung nur als Beispiel dient und in keiner Weise einschränkend ist. Vielmehr sind Modifikationen und Änderungen möglich, ohne den Schutzbereich der vorliegenden Erfindung zu verlassen, der durch die beiliegenden Ansprüche definiert ist.

**Patentansprüche**

1. Distanzmessvorrichtung (30) zum Messen einer Distanz D zu einem Objekt (44'; 44"), umfassend eine Lichtquelle (32) zum Aussenden eines Lichtsignals (34), eine zumindest einen Empfangssensor (38) aufweisende Empfangseinrichtung zum Empfangen des ausgesendeten und an einem Objekt (44'; 44") reflektierten Lichtsignals (34'; 34") und eine Auswerteeinrichtung (40) zum Auswerten des empfangenen Lichtsignals,
**dadurch gekennzeichnet, dass** die Empfangseinrichtung und die Auswerteeinrichtung (40) derart ausgebildet und eingerichtet sind, dass verschiedene zu messende Distanzen $D_1$ bis $D_n$ bei konstantem absoluten Distanzmessfehler $\Delta D$ ermittelbar sind.

2. Distanzmessvorrichtung (30) nach Anspruch 1, **dadurch gekennzeichnet, dass** die Lichtquelle (32) eine LED aufweist.

3. Distanzmessvorrichtung (30) nach Anspruch 1, **dadurch gekennzeichnet, dass** die Lichtquelle (32) einen Laser aufweist.

4. Distanzmessvorrichtung (30) nach einem der vorhergehenden Ansprüche, **dadurch gekennzeichnet, dass** diese eine Modulationseinrichtung (40) zum Modulieren des von der Lichtquelle (32) ausgesendeten Lichtsignals (34) aufweist.

5. Distanzmessvorrichtung (30) nach einem der vorhergehenden Ansprüche, **dadurch gekennzeichnet, dass** die Empfangsvorrichtung Winkelselektionsmittel (36) aufweist, die derart ausgebildet und angeordnet sind, dass sie an dem Objekt (44'; 44") reflektierte Lichtsignale (34'; 34") nur dann auf wenigstens einen Empfangssensor (38) treffen lassen, wenn diese unter einem vorbestimmten und konstanten Winkel $\alpha$ in Bezug auf die Aussendungsrichtung des Lichtsignals (34) auf die Winkelselektionsmittel (36) treffen.

6. Distanzmessvorrichtung (30) nach Anspruch 5, **dadurch gekennzeichnet, dass** diese Winkelselektionsmittel (36) röhrenartige Elemente sind, die jeweils im Winkel $\alpha$ ausgerichtet sind.

**7.** Distanzmessvorrichtung (30) nach Anspruch 6, **dadurch gekennzeichnet, dass** die Winkelselektionsmittel (36) in einer vorbestimmten Formation angeordnet sind.

**8.** Distanzmessvorrichtung (30) nach einem der Ansprüche 5 bis 7, **dadurch gekennzeichnet, dass** die Empfangseinrichtung eine geeignet gestaltete Optik zur Fixierung des Winkels $\alpha$ aufweist.

**9.** Distanzmessvorrichtung (30) nach einem der vorhergehenden Ansprüche, **dadurch gekennzeichnet, dass** zumindest ein Empfangssensor (38) ein Zeilensensor ist.

**10.** Distanzmessvorrichtung (30) nach einem der vorhergehenden Ansprüche, **dadurch gekennzeichnet, dass** zumindest ein Empfangssensor (38) ein flächiger Sensor mit Matrixanordnung ist.

**11.** Distanzmessvorrichtung (30) nach einem der vorhergehenden Ansprüche, **dadurch gekennzeichnet, dass** mehrere Empfangssensoren (38) vorgesehen sind, die jeweils einem der Winkelselektionsmittel (36) zugeordnet sind.

**12.** Distanzmessvorrichtung (30) nach einem der vorhergehenden Ansprüche, **dadurch gekennzeichnet, dass** die Empfangseinrichtung oder die Auswerteeinrichtung (40) eine Frequenzfilterungseinrichtung aufweist.

**13.** Distanzmessvorrichtung (30) nach einem der vorhergehenden Ansprüche, **dadurch gekennzeichnet, dass** die Auswerteeinrichtung (40) derart ausgebildet und eingerichtet ist, dass sie den Abstand D unter Verwendung der Gleichung

$$D = \tan \alpha \times R$$

ermittelt, wobei $\alpha$ der vorbestimmte Winkel und R der kürzeste laterale Abstand zwischen der Aussendungsrichtung des Lichtsignals (34) und der Position desjenigen Empfangssensors (38) ist, der das Lichtsignal empfangen hat.

**14.** Distanzmessvorrichtung (30) nach einem der vorhergehenden Ansprüche, **dadurch gekennzeichnet, dass** die Auswerteeinrichtung (40) eine Intensitätsvergleichseinrichtung zum Vergleichen von Intensitäten verschiedener empfangener Lichtsignale aufweist.

**15.** Distanzmessvorrichtung (30) nach einem der vorhergehenden Ansprüche, **dadurch gekennzeichnet, dass** die Auswerteeinrichtung (40) derart ausgebildet und eingerichtet ist, dass sie, wenn Lichtsignale an verschiedenen Positionen eines Empfangssensors (38) oder an mehreren Empfangssensoren (38) empfangen wurden, den Abstand unter Verwendung des lateralen Abstands R zu demjenigen Empfangssensor (38) wählt, der das Lichtsignal mit der größten Intensität empfangen hat.

**16.** Verfahren zum Messen einer Distanz D zu einem Objekt (44'; 44") mit Hilfe eines ausgesendeten Lichtsignals (34), **dadurch gekennzeichnet, dass** dieses derart ausgestaltet ist, dass verschiedene Distanzen $D_1$ bis $D_n$ bei konstantem Distanzmessfehler $\Delta D$ ermittelbar sind.

**17.** Verfahren nach Anspruch 16, **dadurch gekennzeichnet, dass** das Verfahren die Schritte aufweist:

- Aussenden eines Lichtsignals (34);
- Empfangen des ausgesendeten und an einem Objekt (44'; 44") reflektierten Lichtsignals (34'; 34"), wobei das empfangene Lichtsignal einen vorbestimmten und konstanten Winkel $\alpha$ in Bezug auf die Aussenderichtung des Lichtsignals (34) aufweist;
- Bestimmen der Empfangsposition, an der das Lichtsignal empfangen wurde;
- Ermitteln eines kürzesten lateralen Abstands R zwischen der Aussenderichtung des Lichtsignals (34) und der Empfangsposition; und
- Ermitteln der Distanz D unter Verwendung der Gleichung

$$D = \tan \alpha \times R.$$

**18.** Verfahren nach Anspruch 16 oder 17, **dadurch gekennzeichnet, dass** das Lichtsignal intensitätsmoduliert ausgesendet wird.

**19.** Verfahren nach Anspruch 17 oder 18, **dadurch gekennzeichnet, dass** die Empfangsposition des Lichtsignals basierend auf einer Intensitätsverteilung empfangener Lichtsignale ermittelt wird.

**20.** Verfahren nach einem der Ansprüche 17 bis 19, **dadurch gekennzeichnet, dass** empfangene Lichtsignale mit vorbestimmten Frequenzen gefiltert werden.

**Fig. 1**

**Fig. 2**

**Fig. 3**

**Fig. 4**

**Fig. 5**

36

38

**Fig. 6**

D

ΔD

ΔD

R

ΔR

ΔR